**Europäisches Patentamt**

**European Patent Office**

**Office européen des brevets**

(19)

(11) Veröffentlichungsnummer: **0 571 980 B1**

## (12) EUROPÄISCHE PATENTSCHRIFT

(45) Veröffentlichungstag der Patentschrift: **08.11.95**

(21) Anmeldenummer: **93108508.8**

(22) Anmeldetag: **26.05.93**

(51) Int. Cl.⁶: **B67B 3/20**, B67B 3/26, B23P 19/06

(54) **Vorrichtung zum Verschrauben von Gegenständen, insbesondere eines Schraubverschlusses auf einem Behälter.**

(30) Priorität: **26.05.92 DE 4217461**

(43) Veröffentlichungstag der Anmeldung:
**01.12.93 Patentblatt 93/48**

(45) Bekanntmachung des Hinweises auf die Patenterteilung:
**08.11.95 Patentblatt 95/45**

(84) Benannte Vertragsstaaten:
**CH DE FR GB IT LI NL**

(56) Entgegenhaltungen:
DE-A- 3 715 935
FR-A- 2 554 801
US-A- 4 614 077

(73) Patentinhaber: **WILHELM BAUSCH, ROLF STRÖBEL, SIEGFRIED BULLINGER, Gesellschaft des Bürgerlichen Rechts Parkstrasse 1 W-7174 Ilshofen (DE)**

(72) Erfinder: **Schöllmann, Wolfgang Renngässle 16 W-7180 Crailsheim (DE)**
Erfinder: **Krax, Peter Finsterlohr 37 W-6993 Creglingen (DE)**
Erfinder: **Bullinger, Siegfried Kürzstrasse 29 W-7174 Ilshofen (DE)**

(74) Vertreter: **Liska, Horst, Dr.-Ing. et al Patentanwälte H. Weickmann,K. Fincke,F.A. Weickmann, B. Huber,H. Liska,J. Prechtel,B. Böhm Postfach 86 08 20 D-81635 München (DE)**

EP 0 571 980 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 571 980 B1

**Beschreibung**

Die Erfindung betrifft eine Vorrichtung zum Verschrauben zweier Gegenstände, insbesondere zum Aufschrauben eines Schraubverschlusses auf einem Behälter, umfassend
zwei in Richtung der Schraubachse relativ zueinander beweglich an einer Maschinenbasis geführte Aufnahmen für die beiden Gegenstände, von denen eine erste,
insbesondere zur Führung des Behälters bestimmte Aufnahme den Gegenstand im wesentlichen drehfest an der Maschinenbasis führt, und eine zweite, insbesondere zur Führung des Schraubverschlusses bestimmte Aufnahme um die Schraubachse drehbar an der Maschinenbasis gelagert ist,
einen die zweite Aufnahme rotierend antreibenden Elektromotor,
Mittel, die das momentane, auf die Gegenstände ausgeübte Drehmoment erfassen und
eine auf die Drehmomenterfassungsmittel ansprechende,
den Motor bei Erreichen eines vorbestimmten Sollwerts des Drehmoments abschaltende Steuerung.

Verschraubmaschinen zum Aufschrauben von Schraubverschlüssen, wie zum Beispiel Schraubkappen oder dergleichen auf Behälter, sollen in der Lage sein, den Schraubverschluß mit möglichst gleichbleibendem Enddrehmoment in möglichst kurzer Zeit aufzuschrauben. Aus der DE-A-37 15 935 ist eine Verschraubmaschine bekannt, die den Behälter drehfest in einer Aufnahme eines den Behälter aus einer Füllmaschine zuführenden Transporttellers hält. Die aufzuschraubende Verschlußkappe wird in einer von einem Drehstrommotor um die Schraubachse rotierend angetriebenen Aufnahmezange gehalten. Die Aufnahmezange ist samt dem Drehstrommotor längs der Schraubachse auf den Behälter absenkbar, so daß im Verlauf der Absenkbewegung die Schraubkappe auf den Behälter aufgeschraubt wird. Eine Steuerung überwacht den Motorstrom, der ein Maß für das vom Motor ausgeübte Drehmoment ist, und schaltet den Motor ab, sobald der Strom einen vorbestimmten Wert übersteigt. Zusätzlich wird der Verschraubungshub überwacht, um erkennen zu können, ob die Schraubkappe bis in ihre den Behälter normal verschließende Endstellung geschraubt wurde oder aber sich vorher beispielsweise durch schiefes Aufsetzen verklemmt hat.

Es ist weiterhin bekannt, im Drehmomentübertragungsweg zwischen einer die Schraubkappe aufnehmenden Aufnahmezange und den die Aufnahmezange antreibenden Elektromotor einer Verschraubmaschine eine Rutschkupplung anzuordnen, die das von der Aufnahmezange ausgeübte Drehmoment begrenzt.

Bei den bekannten Verschraubmaschinen läßt sich das Enddrehmoment, mit dem der Schraubverschluß auf den Behälter aufgeschraubt wird, nur mit vergleichsweise großen Toleranzen reproduzieren. Die Überwachung des Drehmoments über den vom Antriebsmotor der Verschraubmaschine aufgenommenen Strom birgt Fehlerquellen aufgrund des Schwungmoments der angetriebenen Komponenten und der inneren Reibung der an der Verschraubung und dem Antrieb beteiligten Teile. Entsprechendes gilt für Verschraubmaschinen, die das Enddrehmoment mittels einer Rutschkupplung definieren, wobei sich im Fall der Rutschkupplung auch noch deren Reibwerte ändern können. Den bekannten Verschraubmaschinen ist ferner gemeinsam, daß der gewünschte Sollwert des Enddrehmoments um so schlechter eingehalten werden kann, je höher die Verschlußtaktrate der Verschlußmaschine ist, da bei einer Erhöhung der Arbeitsgeschwindigkeit rascher beschleunigende und damit stärkere Antriebsmotoren eingesetzt werden müssen, wodurch die Trägheitsmomente der zu beschleunigenden und abzubremsenden Komponenten erhöht werden. Hinzu kommen Fertigungstoleranzen der Behälter und der Schraubverschlüsse, die ebenfalls das tatsächlich erreichte Enddrehmoment beeinflussen.

Es ist Aufgabe der Erfindung, eine Vorrichtung zum Verschrauben zweier Gegenstände, insbesondere zum Aufschrauben eines Schraubverschlusses auf einem Behälter, anzugeben, die es erlaubt, die Gegenstände rasch und mit vergleichsweise geringer Abweichung von einem Sollwert des bei der Verschraubung auf die Gegenstände ausgeübten Enddrehmoments miteinander zu verschrauben.

Ausgehend von der eingangs erläuterten Vorrichtung wird diese Aufgabe erfindungsgemäß dadurch gelöst, daß die Steuerung Mittel zur Steuerung der momentanen Drehzahl des Motors umfaßt und die momentane Drehzahl des Motors abhängig vom Wert des von den Drehmomenterfassungsmitteln erfaßten Drehmoments mit wachsendem Drehmoment mindert.

Die Erfindung eignet sich insbesondere zum Aufschrauben von Schraubverschlüssen auf Behälter, ist jedoch nicht hierauf beschränkt, wenngleich die Erfindung und die sich daraus ergebenden Vorteile nachfolgend für dieses Anwendungsgebiet erläutert werden. Die Erfindung eignet sich für alle Anwendungsfälle, bei welchen zwei Gegenstände mit einem definierten Enddrehmoment rasch miteinander verschraubt werden sollen.

Im Rahmen der Erfindung wird das zwischen dem Schraubverschluß und dem Behälter übertragene Drehmoment gemessen, und die Steuerung mindert die Drehzahl des vorzugsweise den Schraubverschluß rotierend antreibenden Motors mit wachsendem Drehmoment. Je mehr sich das Drehmoment dem Sollwert

2

des Enddrehmoments nähert, um so langsamer dreht der Motor. Sobald das Drehmoment den Sollwert erreicht, wird der Motor abgeschaltet. Da die Drehzahl bereits im Verlauf der Annäherung an das Enddrehmoment weitgehend gemindert wurde, ergibt sich auch nur ein sehr geringer Nachlauf, so daß der Sollwert des Drehmoments in engen Toleranzen eingehalten werden kann. Während der Annäherungsphase, in welcher der Schraubverschluß lose auf das Gewinde des Behälters aufgeschraubt wird, arbeitet der Motor mit beträchtlich größerer Drehzahl, wodurch eine hohe Aufschraubgeschwindigkeit erreicht wird.

Die Minderung der Drehzahl des Motors in Abhängigkeit von dem erfaßten Drehmoment kann kontinuierlich oder aber in Stufen erfolgen. In einer bevorzugten Ausgestaltung, die besonders geringe Toleranzen bei vergleichsweise hoher Schraubgeschwindigkeit erlaubt, ist vorgesehen, daß die Steuerung die Drehzahl des Motors entsprechend einem vorbestimmten Funktionszusammenhang steuert, der Drehmomentwerten, die von einem insbesondere vorbestimmten Drehmoment-Anfangswert zumindest angenähert auf den vorbestimmten Sollwert zunehmen, Drehzahlwerte zuordnet, die von einem insbesondere vorbestimmten Drehzahl-Anfangswert auf angenähert null abnehmen. Auf diese Weise können weitgehend gleichbleibende Verschraubungsparameter eingehalten werden, die es erlauben, den Schraubverschluß mit optimaler Verschraubungsgeschwindigkeit in die Verschraubungsendstellung zu drehen und zwar so, daß in der Verschraubungsendstellung die Drehgeschwindigkeit nahezu null ist und damit der Schraubantrieb mit vernachlässigbarem Drehmomentüberschwinger aufgrund des Schwungmoments angehalten werden kann. Der vorbestimmte Funktionszusammenhang kann ein nicht linearer Zusammenhang zwischen dem Drehmoment und der Drehzahl sein. Sehr leicht zu realisieren ist jedoch eine Ausgestaltung, bei der die Steuerung die Drehzahl des Motors proportional zur Differenz zwischen dem Drehmoment-Sollwert und dem erfaßten Wert des momentanen Drehmoments einstellt. Die Abweichung des erfaßten Werts des Drehmoments, d.h. des Ist-Werts, von dem Drehmoment-Sollwert liefert unmittelbar ein Maß für die Einstellung der Drehzahl und sorgt dafür, daß die Drehzahl bei Erreichen des Drehmoment-Sollwerts null wird. Der vorbestimmte Funktionszusammenhang kann, wenn die Steuerung in der Lage ist, die Drehzahlabregelung bei konstanten Anfangswerten von Drehzahl und Drehmoment beginnen zu lassen, gleichbleibend vorgegeben sein. Vorzugsweise errechnet jedoch die Steuerung den Funktionszusammenhang abhängig von aktuell vorgegebenen Anfangswerten des Drehmoments und der Drehzahl sowie des zu erreichenden Drehmoment-Sollwerts.

Um für die Drehzahlabregelung definierte Anfangsbedingungen zu schaffen, ist den Aufnehmern zweckmäßigerweise eine Positionssensoranordnung zugeordnet, die während der Annäherung der zu verschraubenden Gegenstände bei Erreichen eines vorbestimmten Abstandes die Steuerung veranlaßt, die Drehzahl des Motors auf den vorbestimmten Drehzahl-Anfangswert einzustellen. Auf diese Weise kann der Schraubverschluß zunächst mit höherer Drehzahl über einen Teil seiner Gewindegänge auf den Behälter aufgeschraubt werden, bevor das Steuersignal die Drehzahl auf den für die Drehzahlabregelung festgelegten, niedrigeren Anfangswert einstellt. Die zum Aufschrauben des Schraubverschlusses benötigte Zeitspanne kann so beachtlich verkürzt werden.

Bei der vorstehend erläuterten Positionssensoranordnung ist der Positionssensor beispielsweise als Näherungsinitiator oder als Lichtschranke ausgebildet und erfaßt unmittelbar die Position eines fest mit der zweiten Aufnahme verbundenen Maschinenteils relativ zur Maschinenbasis. Da bei einer solchen Ausgestaltung der Positionssensor in der Regel nahe der Schraubverschlußaufnahme angeordnet werden muß, hat es sich als günstig erwiesen, wenn die Positionssensoranordnung zwei Positionssensoren umfaßt, von denen einer die Position eines den Motor tragenden, verschiebbar an der Maschinenbasis geführten Schraubkopfs relativ zur Maschinenbasis erfaßt und der andere die Position der verschiebbar an dem Schraubkopf geführten, zweiten Aufnahme relativ zum Schraubkopf erfaßt. Die Steuerung stellt den Motor dann abhängig von Signalen beider Positionssensoren auf den vorbestimmten Drehzahl-Anfangswert ein. Vorteil dieser Ausgestaltung ist jedoch, daß die beiden Positionssensoren gegebenenfalls auch entfernt von der zweiten Aufnahme an einer Stelle angebracht werden können, an der sie den Zugang zu den Aufnahmen weniger behindern.

Die Steuerung sorgt zweckmäßigerweise dafür, daß bei Beginn der Drehzahlabregelung die dem vorbestimmten Funktionszusammenhang zwischen Drehmoment und Drehzahl zugrunde liegenden Anfangswerte gleichbleibend eingehalten werden. Hierzu stellt die Steuerung zunächst die Drehzahl des Motors auf den vorbestimmten Drehzahl-Anfangswert ein, um dann abhängig von dem erfaßten Wert des Drehmoments die Drehzahl ausgehend von diesem Anfangswert zu mindern, sobald der erfaßte Wert des Drehmoments den vorbestimmten Drehmoment-Anfangswert übersteigt. Der Drehmoment-Anfangswert ist zweckmäßigerweise so bemessen, daß er über dem bei anfänglichem Gewindeeingriff zwischen Schraubverschluß und Behälter sich ergebendem Reibungswert liegt, um sicherzustellen, daß die Drehzahl-Abregelung erst beginnt, nachdem der Schraubverschluß einige Gewindegänge mit hoher Drehzahl auf den Behälter aufgeschraubt wurde.

EP 0 571 980 B1

Mit besonders engen Toleranzen reproduzierbare Enddrehmomente lassen sich erreichen, wenn dem Motor ein Drehzahlregelkreis zugeordnet ist, der die Drehzahl des Motors auf einem Drehzahl-Sollwert einregelt, den die Drehzahlsteuermittel der Steuerung festlegen. Auf diese Weise kann nicht nur der Drehzahl-Anfangswert exakt vorgegeben und eingehalten werden, sondern auch der durch den Funktionszusammenhang zwischen Drehzahl und Drehmoment bestimmte Drehzahlverlauf.

Um die Zeitspanne, in der der Motor mit sehr geringer Drehzahl dreht, nicht unnötig zu verlängern, ist in einer zweckmäßigen Ausgestaltung vorgesehen, daß die Drehzahlsteuermittel abhängig von der an dem Motor einzustellenden Drehzahl bei Abnahme der Drehzahl auf nahe null oder/und abhängig von dem erfaßten Wert des Drehmoments bei Annäherung an einen Wert ungefähr gleich dem Drehmoment-Sollwert die Drehzahl konstant hält, bis der Drehmoment-Sollwert erreicht ist. Sobald das auf den Schraubverschluß ausgeübte Drehmoment hinreichend nahe an das gewünschte Enddrehmoment angenähert und/oder die Drehzahl des Motors hinreichend gering ist, wird mit anderen Worten die drehmomentabhängige Minderung der Motordrehzahl beendet und der Motor mit gleichbleibender geringer, allenfalls in Stufen sich noch verringernder Drehzahl bis zum Erreichen des Enddrehmoments weiterbetrieben.

Soweit es sich bei dem Motor um einen Elektromotor handelt, können die Drehmomenterfassungsmittel können auf den Erregerstrom des Elektromotors ansprechen. Hier werden jedoch störende Einflüsse auf das Drehmoment durch mechanische Reibung vom Motor bis hin zum Schraubkopf mit ausgewertet. Eine exaktere Erfassung des Drehmomentwerts läßt sich jedoch erreichen, wenn mittels eines Drehmomentsensors unmittelbar das auf die Schraubkappe oder den Behälter ausgeübte Drehmoment gemessen wird. Um durch die Komponenten des Drehmomentsensors nicht das Schwungmoment des Motors zu erhöhen, erfaßt der Drehmomentsensor zweckmäßigerweise das auf den in der ersten Aufnahme geführten Gegenstand, d.h. den Behälter, ausgeübte Drehmoment. Gegenüber einer Drehmomentmessung an der Schraubkappe ergibt sich hierbei der Vorteil, daß Probleme aufgrund der dynamischen Rotationsbewegung und damit verbundene Kontaktierprobleme vermieden werden. Die Drehmomentmessung läßt sich bei Gegenständen bzw. Behältern mit kreisförmiger, zur Schraubachse koaxialer Querschnittsform besonders exakt durchführen, wenn die erste Aufnahme einen gleichachsig zur Schraubachse drehbaren Auflageteller und drei um die Schraubachse herum verteilt angeordnete, achsparallel zueinander und zur Schraubachse vorzugsweise zumindest begrenzt schwenkbare Stützelemente umfaßt, von denen eines federnd auf die andern beiden zu vorgespannt ist und ferner eines spielfrei mit dem Drehmomentsensor gekuppelt ist. In einer solchen Anordnung wird das Kraftübertragungselement des Drehmomentsensors mit zur Führung des Behälters ausgenutzt, womit nur sehr geringe, das Meßergebnis verfälschende Reibmomente auftreten. Zweckmäßigerweise ist die mit dem Drehmomentsensor gekuppelte Andruckrolle zusammen mit dem Drehmomentsensor als Einheit quer zur Schraubachse verschiebbar an der Maschinenbasis geführt. Die beiden anderen, an stationären Achsen drehbar geführten Andruckrollen übernehmen damit die Zentrierung der Schraubachse des Behälters.

In einer Variante, die speziell bei Behältern mit nicht kreisförmigem Querschnitt eingesetzt werden kann, umfaßt die erste Aufnahme Haltemittel, die den Gegenstand um die Schraubachse drehfest an der ersten Aufnahme halten. Die Drehmomenterfassungsmittel umfassen hierbei einen Drehmomentsensor, der dann das auf die Haltemittel ausgeübte Drehmoment erfaßt. Die Haltemittel können den Behälter kraftschlüssig halten und beispielsweise die Form einer Zange oder dergleichen haben; der Einfachheit halber sind sie jedoch als Formstück ausgebildet, das der Querschnittsform des Behälters angepaßt ist und die Gegenstände im Formschluß drehfest hält. Die Haltemittel sind zweckmäßigerweise um die Schraubachse drehbar an der Maschinenbasis gelagert, wobei der Drehmomentsensor direkt mit den Haltemitteln gekuppelt ist, indem er in Verlängerung der Schraubachse unterhalb der Aufnahme angeordnet ist oder aber indem er über ein Rädergetriebe, beispielsweise ein Reibradgetriebe mit den Haltemitteln gekuppelt ist.

Bei dem Motor handelt es sich zweckmäßigerweise um einen Elektromotor und bevorzugt um einen bürstenlosen Gleichstrommotor. Motoren dieser Art lassen sich mit vergleichsweise geringem Trägheitsmoment realisieren. Bei dem Motor kann es sich aber auch um einen Luftmotor oder einen hydraulischen Motor handeln.

Es existieren Sonderformen von Schraubverschlüssen, beispielsweise sogenannte Originalitätsverschlüsse, bei welchen während der Verschraubung zunächst ein hoher Drehmomentwert überwunden werden muß, bevor der Schraubverschluß mit einem vorbestimmten Enddrehmoment auf den Behälter geschraubt wird. Um dies auch im Rahmen der Erfindung zu ermöglichen, ist in einer bevorzugten Ausgestaltung der Steuerung ein Speicher für mehrere unterschiedlich große Drehmoment-Sollwerte zugeordnet. Die Steuerung schaltet den Motor erst dann ab, wenn der erfaßte Wert des Drehmoments mehrere der Drehmoment-Sollwerte in einer vorbestimmten Reihenfolge und in einer vorbestimmten Richtung überschreitet. Die vorstehend erläuterte Drehzahlabregelung des Motors vor dem Abschalten setzt damit die Überschreitung ein oder mehrerer Drehmoment-Sollwerte voraus. Für die Drehmomenterfassung kann der ohnehin vorgesehene Drehmomentsensor ausgenutzt werden.

In einer weiteren bevorzugten Ausgestaltung der Erfindung ist der Steuerung ein Dokumentationsspeicher zugeordnet, in welchem für jede einzelne Verschraubung oder für Gruppen in ihrer Anzahl vorbestimmter, aufeinanderfolgender Verschraubungen eine den erfaßten Wert des Drehmoments repräsentierende Information speicherbar ist. Hierbei wird die ohnehin erfolgende Messung des aktuellen Drehmoments zu Dokumentationszwecken ausgenutzt. Bei den zu speichernden Informationen kann es sich um die tatsächlichen Meßwerte oder auch nur um die Anzahl der in verschiedene Toleranzgruppen fallenden Verschraubungen handeln.

Die im Vorstehenden anhand der Verschraubungsvorrichtung erläuterten Maßnahmen zur Drehmomenterfassung und Dokumentation des erreichten Enddrehmoments ermöglichen unter einem zweiten Aspekt der Erfindung eine Stichprobenüberprüfung und Dokumentation des real erreichten Drehmoments durch Abschrauben eines vorangegangen aufgeschraubten Schraubverschlusses.

Im folgenden wird die Erfindung anhand einer Zeichnung näher erläutert. Hierbei zeigt:

Fig. 1          eine teilweise geschnittene, teilweise schematische Darstellung einer Verschraubmaschine zum Aufschrauben von Schraubverschlüssen auf Behälter,

Fig. 2a und 2b   Zeitdiagramme, die die Drehzahl n eines Elektromotors der Verschraubmaschine bzw. das auf den Behälter ausgeübte Drehmoment M abhängig vom Zeitparameter t zeigen und

Fig. 3 und 4     Varianten von in der Verschraubmaschine nach Fig. 1 verwendbaren Drehmomenterfassungseinrichtung.

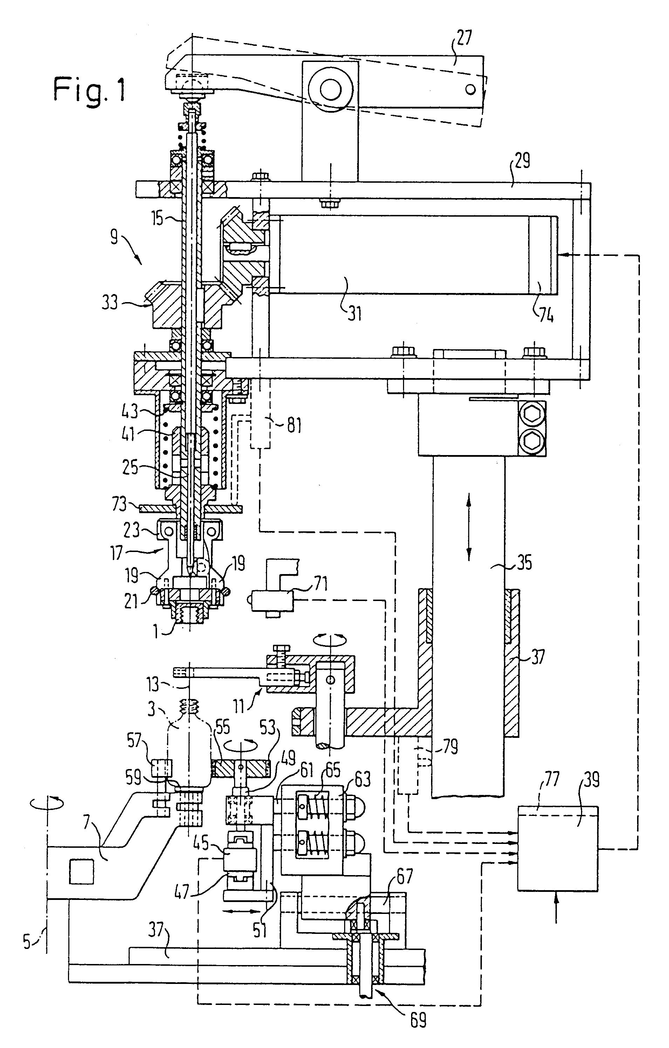

Die in Fig. 1 dargestellte Verschraubmaschine erlaubt das Aufschrauben von Schraubverschlüssen 1, beispielsweise Schraubkappen, auf Behälter 3, die von einem um eine Drehachse 5 rotierenden Transportstern 7 aufeinanderfolgend unter einen Schraubkopf 9 der Schraubmaschine transportiert werden. Der Schraubkopf 9, dem die Schraubverschlüsse 1 mittels einer Zuführeinrichtung 11 oder dergleichen im Takt des Transportsterns 7 zugeführt werden, hält die Schraubverschlüsse 1 gleichachsig zur Schraubachse 13 des Behälters 3 in einem über dem Behälter 3 am unteren Ende einer Spindel 15 drehfest angeordneten Spannkopf 17. Der Spannkopf 17 hat mehrere um die zur Schraubachse 13 gleichachsige Spindelachse herum angeordnete Zangenglieder 19, die von einer Ringfeder 21 gegen den Schraubverschluß 1 gespannt werden. Die Zangenglieder 19 sind an einer drehfest auf der Spindel 15 sitzenden Kopfbasis 23 angelenkt und können zum Öffnen des Spannkopfs 17 mittels einer in der Spindel längsverschiebbar geführten Stange 25 auseinandergezwängt werden. Die Stange 25 tritt am spannkopffernen Ende der Spindel 15 aus, wo ein nicht näher dargestellter, mit der Zuführeinrichtung 11 synchronisierter Stellantrieb über einen Hebel 27 den Spannkopf zur Aufnahme des Schraubverschlusses 1 gegen die Kraft der Ringfeder 21 öffnet.

An einem Rahmen 29 des Schraubkopfes 9 ist ein bürstenloser Gleichstrommotor 31 gehalten, der über ein Kegelradgetriebe 33 direkt mit der Spindel 15 und damit dem Spannkopf 17 drehfest verbunden ist. Der Motor 31 treibt den Spannkopf 17 in Aufschraubrichtung des Schraubverschlusses 1 an. Der gesamte Schraubkopf 9 einschließlich des Motors 31 sitzt auf einer achsparallel zur Schraubachse 13 und damit zur Spindel 15 achsparallelen Führungssäule 35, die in einer bei 37 angedeuteten Maschinenbasis von einem nicht näher dargestellten Antrieb vertikal verschiebbar geführt ist. Zum Aufschrauben des Schraubverschlusses 1 auf den Behälter 3 wird der Schraubkopf 9 bei rotierendem Spannkopf 17 abgesenkt, bis der Schraubverschluß 1 mit einem vorbestimmten Enddrehmoment auf dem Behälter 3 sitzt, und eine auf das Erreichen des Enddrehmoments in nachfolgend noch näher erläuterter Weise ansprechende Steuerung 39 schaltet dann den Motor 31 ab und initiiert das Öffnen des Spannkopfs 17 sowie die Zuführung eines weiteren Behälters sowie eines weiteren Schraubverschlusses. Um Unterschiede in der vertikalen Zustellgeschwindigkeit, mit der der Spannkopf 17 den Schraubverschluß 1 auf dem Behälter 3 aufschraubt, zur Absenkgeschwindigkeit des Schraubkopfes 9 ausgleichen zu können, ist der Spannkopf 17 mittels einer Hülse 41 an der Spindel 15 längsverschiebbar, jedoch drehfest geführt und wird von einer Feder 43 zum Behälter 3 hin vorgespannt.

Zur Erfassung des Drehmoments, mit dem der Schraubverschluß 1 auf dem Behälter 3 aufgeschraubt wird, ist der Steuerung 39 ein Drehmomentsensor 45 zugeordnet, der mit seiner Basis 47 drehsteif und seiner zur Schraubachse 13 achsparallelen Eingangswelle 49 drehbar in einer definiert an der Maschinenbasis 37 geführten Gabel 51 gelagert ist. Die Eingangswelle 49 trägt drehfest eine an ihrem Umfang mit einem Reibbelag 53 versehene Andruckrolle 55, die zusammen mit zwei weiteren Andruckrollen 57, die achsparallel zur Schraubachse 13 an dem Transportstern 7 gelagert sind, den Behälter 3 zwischen sich führen. Von den Andruckrollen 57 ist in Fig. 1 nur eine dargestellt. Der Behälter 3 hat zumindest im Bereich der Andruckrollen 55, 57 Kreisquerschnitt und ist auf einen gleichachsig zur Schraubachse 13 drehbaren Auflageteller 59 des Transportsterns 7 aufgesetzt. Die Gabel 51 ist ihrerseits mit Führungsstangen 61 radial zur Eingangswelle 49 des Drehmomentsensors 45 verschiebbar an einem Schlitten 63 geführt. An dem Schlitten 63 abgestützte Federn 65 spannen die Andruckrolle 55 gegen den ansonsten an den Andruckrollen 57 und dem Auflageteller 59 um die Schraubachse 13 mit sehr geringer Reibung drehbar geführten Behälter 3. Das über den Schraubverschluß 1 auf den Behälter 3 ausgeübte Drehmoment wird damit nicht oder nur sehr wenig durch Reibmomente verfälscht auf den Drehmomentsensor 45 übertragen. Der Schlitten 63 ist an einer Führung 67 der Maschinenbasis 37 quer zur Schraubachse 13 beweglich geführt und wird von einem nicht näher dargestellten Exzenterantrieb 69 für den Transport der Behälter 3 durch die Verschraubmaschine aus der in Fig. 1 dargestellten Andrückposition herausbewegt.

Der Steuerung 39 ist ferner ein zur Maschinenbasis 37 stationärer Positionssensor 71, hier vorzugsweise in Form eines Näherungsinitiators oder einer Lichtschranke, zugeordnet, der auf eine an der Spindel 15 angebrachte Steuerscheibe 73 anspricht, wenn die Steuerscheibe 73 bei der Absenkbewegung des Spannkopfs 17 an dem Positionssensor 71 vorbeibewegt wird. Der Positionssensor 71 und die Steuerscheibe 73 sind relativ zueinander so justiert, daß der Positionssensor 71 erst dann ein Steuersignal erzeugt, wenn der Schraubverschluß 1 bereits zum Teil auf dem Behälter 3 aufgeschraubt ist.

Die Steuerung 39 steuert die momentane Drehzahl des Motors 31 so, daß einerseits die zum Aufschrauben des Schraubverschlusses 1 auf dem Behälter 3 erforderliche Zeitspanne minimal wird und andererseits dennoch das Enddrehmoment, mit dem der Schraubverschluß 1 gegen seinen Dichtsitz an dem Behälter geschraubt wird, mit sehr engen Toleranzen auf einem vorbestimmten Sollwert gehalten werden kann. Die Steuerung 39 liefert hierzu in Abhängigkeit von dem mittels des Drehmomentsensors 45 erfaßten Wert des momentan von dem Motor 31 über die Schraubkappe 1 auf den Behälter 3 ausgeübten Drehmoments ein Drehzahl-Sollwertsignal, welches die momentane Drehzahl des Motors 31 festlegt. Der Motor 31 ist als drehzahlregelbarer Motor ausgebildet und enthält einen nicht näher dargestellten Drehzahlregelkreis, der die Istdrehzahl des Motors 31 mittels eines Tachometers 73 erfaßt und auf den durch das Drehzahl-Sollwertsignal festgelegten Wert einregelt. Bei Annäherung an die Endstellung des Schraubverschlusses 1 wächst das von dem Drehmomentsensor 45 gemessene Drehmoment an. Die Steuerung 39 mindert in dieser Phase des Schraubvorgangs das Drehzahl-Sollwertsignal proportional zur momentanen Differenz zwischen dem endgültig zu erreichenden Drehmoment-Sollwert und dem vom Drehmomentsensor 45 aktuell erfaßten Drehmoment-Istwert. Auf diese Weise wird erreicht, daß die Drehzahl sich dem Stillstand nähert, je mehr sich das Drehmoment dem Drehmoment-Sollwert annähert. Bei Erreichen des Drehmoment-Sollwerts schaltet die Steuerung 39 den Motor 31 ab. Da der Motor 31 vorangegangen bis nahe an den Stillstand heran abgeregelt wurde, ist das verbleibende Schwungmoment vernachlässigbar, und das Enddrehmoment kann mit sehr geringen Toleranzen eingehalten werden.

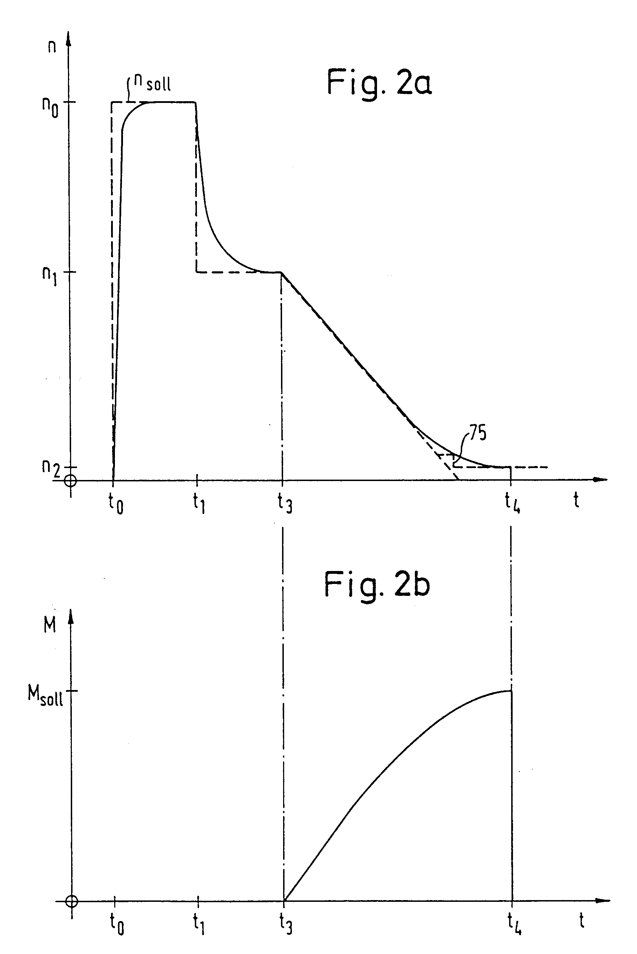

Die Fig. 2a und 2b zeigen Einzelheiten des Zeitverlaufs der Motordrehzahl n und des vom Drehmomentsensor 45 gemessenen Drehmoments M. Zum Zeitpunkt $t_0$ wird der Verschraubungsvorgang durch ein der Steuerung 39 zugeführtes Startsignal gestartet. Der durch die Steuerung 39 bestimmte, in Fig. 2a durch eine gestrichelte Linie angedeutete Drehzahl-Sollwert $n_{soll}$ springt auf einen ersten Wert $n_0$, mit dem der Motor 31 nachfolgend den Schraubverschluß 1 über einen Teil der Gewindegänge auf den Behälter 3 schraubt. Fig. 2a zeigt mit einer durchgehend ausgezogenen Linie den tatsächlichen Drehzahlverlauf, mit dem der Drehzahlregelkreis der Sollwertvorgabe folgt. Nachdem der Schraubverschluß 1 bereits teilweise aufgeschraubt ist, erzeugt der Positionssensor 71 zum Zeitpunkt $t_1$ ein Steuersignal, auf das hin die Steuerung 39 den Drehzahl-Sollwert auf einen Wert $n_1 < n_0$ einstellt. Der Drehzahlwert $n_1$ bildet einen konstanten Anfangs-Drehzahlwert für die nun nachfolgende drehmomentabhängige Drehzahlminderung. Die beiden Drehzahlsprünge auf $n_0$ und $n_1$ laufen vorzugsweise in einer Rampenfunktion ab. Zum Zeitpunkt $t_3$ steigt das vom Drehmomentsensor 45 erfaßte Drehmoment über einen vorbestimmten Anfangswert größer als dem während der vorangegangenen Teilverschraubung auftretenden Reibungsmoment hinaus an. Die Steuerung 39 beginnt nun, den Drehzahl-Sollwert proportional zur Differenz zwischen dem Sollwert des gewünschten Enddrehmoments $M_{soll}$ und dem vom Drehmomentsensor 45 gemessenen Drehmoment-Istwert zu mindern, was in Fig. 2a durch eine gestrichelte Linie angedeutet ist. Fig. 2b zeigt den mit zunehmender Verschraubung anwachsenden Drehmoment-Istwert. Der Funktionszusammenhang, der es der Steuerung 39 erlaubt, die Drehzahl n ausgehend von den Anfangswerten für Drehzahl und Drehmoment im wesentlichen auf null im Bereich des Drehmoment-Sollwerts abzusenken, ergibt sich, errechnet von der Steuerung 39 entsprechend folgender Gleichung

$$n = n_1 \left(1 - \frac{M}{M_{soll}}\right).$$

6

Die Gleichung geht von einem normierten Drehmomentverlauf aus, wie ihn auch Fig. 2b zeigt, bei welchem zum Zeitpunkt $t_3$ der Anfangswert des Drehmoments zu null angenommen ist. Es versteht sich, daß das tatsächliche, auf den Behälter 3 wirkende Drehmoment um das Reibmoment der bereits verschraubten Gewindegänge höher ist.

Mit weitgehender Annäherung der Drehzahl n an den Stillstand schaltet die Steuerung 39 auf einen zweiten Betriebsmodus um, bei welchem die Drehzahl auf einem sehr geringen Drehzahlwert $n_2$ gehalten wird, bis der Drehmomentsensor 45 zum Zeitpunkt $t_4$ das Erreichen des Drehmoment-Sollwerts meldet. Zum Zeitpunkt $t_4$ schaltet die Steuerung 39 den Motor 31 ab. Es versteht sich, daß die Steuerung 39 bei Annäherung an den Stillstand die Drehzahl gegebenenfalls auch in mehreren aufeinanderfolgenden Drehzahlstufen auf null absenken kann, wie dies bei 75 in Fig. 2a angedeutet ist.

Die Steuerung 39 umfaßt einen bei 77 angedeuteten Datenspeicher, in welchem mehrere Drehmoment-Sollwerte gespeichert werden können. Die Drehmoment-Sollwerte müssen während des Verschraubungsvorgangs in einer vorbestimmten Reihenfolge und Richtung aufeinanderfolgend überschritten werden, bevor die Steuerung 39 mit der vorstehend erläuterten Drehzahlminderung zur Erreichung des Enddrehmoments beginnt. Auf diese Weise können sogenannte Originalitätsverschlüsse aufgeschraubt werden. Der Datenspeicher 77 kann ferner zu Dokumentationszwecken ausgenutzt werden, wenn der Wert des vom Drehmomentsensor 45 zum Zeitpunkt $t_4$ gemessenen Drehmoments für jede einzelne Verschraubung gespeichert wird. Es versteht sich, daß anstelle des Drehmomentwerts auch die erreichte Toleranz, gegebenenfalls in Toleranzklassen, dokumentiert werden kann. Ebenso kann für jeweils eine vorbestimmte Anzahl von Verschraubungen, zum Beispiel chargenweise, die minimale oder maximale Toleranz dokumentiert werden. Der als Näherungsinitiator oder gegebenenfalls als Lichtschranke ausgebildete Positionssensor 71 erfaßt in der Ausführungsform nach Fig. 1 unmittelbar die Position des Spannkopfs 17 bzw. der axial fest mit ihm verbundenen Steuerscheibe 73. Der Positionssensor 71 muß damit nahe dem Spannkopf 17 in einem Bereich angebracht werden, der für Kappenzuführeinrichtungen und Behälterzuführeinrichtungen oder dergleichen weitgehend benötigt wird. Der Positionssensor 71 kann an dieser Stelle entfallen, wenn mit Hilfe von zwei Positionssensoren 79, 81 nicht direkt die Position des Spannkopfs 17 bezogen auf die Maschinenbasis 37 gemessen wird, sondern mittels des Positionssensors 79 die Position des den Motor 31 tragenden Schraubkopfs 9 relativ zur Maschinenbasis 37 einerseits und mittels des Positionssensors 81 die Position des Spannkopfs 17 bzw. der mit ihm verbundenen Steuerscheibe 73 oder eines sonstigen Schraubspindelteils relativ zum Rahmen 29 des Spannkopfs 9 gemessen wird. Die Steuerung 39 errechnet aus den Positionssignalen der Positionssensoren 79, 81 die Position des Spannkopfs 17 relativ zur Maschinenbasis und damit relativ zu dem zu verschraubenden Behälter. Es versteht sich, daß die Abstandsberechnung auch durch eine Verknüpfung erhalten werden kann. Vorteil der Abstandsbestimmung durch die Positionssensoren 79, 81 ist, daß bei einem Formatwechsel aufwendige Einstellarbeiten, wie sie bei dem stationären Positionssensor 71 erforderlich sein können, entfallen.

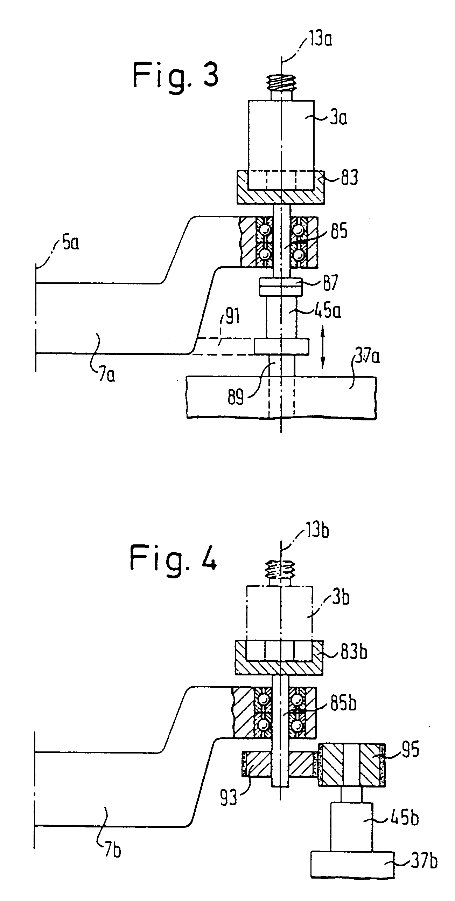

Die Fig. 3 und 4 zeigen Varianten von Drehmomenterfassungseinrichtungen, wie sie anstelle des Drehmomentsensors 45 bei einer Verschraubmaschine gemäß der Fig. 1 eingesetzt werden können. Gleichwirkende Teile sind mit den Bezugszahlen der Fig. 1 bezeichnet und zur Unterscheidung mit einem Buchstaben versehen. Für die Erläuterung dieser Teile wird auf die Beschreibung der Fig. 1 Bezug genommen.

Im Unterschied zu Fig. 1 lassen sich in den Ausführungsformen der Fig. 3 und 4 auch Behälter verschrauben, die keinen kreisförmigen Querschnitt haben. In der Ausführungsform nach Fig. 3 sind die zumindest in ihrem Bodenbereich abweichend von der Kreisform gestalteten Behälter 3a in ein Formteil 83 eingesetzt, das mit einer nach unten abstehenden Welle 85 um die Schraubachse 13a drehbar im Transportstern 7a gelagert ist. Der Drehmomentsensor 45a ist mit seiner Drehmomentmeßachse gleichachsig zur Schraubachse 13a unterhalb des Formstücks 83 angeordnet und drehfest mit der Welle 85 gekuppelt. Die Anordnung kann so getroffen sein, daß der Drehmomentsensor 45a seinerseits drehfest an der Maschinenbasis 37a gehalten ist und über eine lösbare Kupplung 87 aufeinanderfolgend mit in Umfangsrichtung des um die Achse 5a rotierenden Transportsterns 7a aufeinanderfolgenden Formstücken 83 kuppelbar ist. Bei der Kupplung 87 kann es sich beispielsweise um eine Formschlußkupplung oder dergleichen handeln, die durch gesteuertes Verschieben des an einem Zapfen 89 drehfest, längs der Schraubachse 13a verschiebbaren Drehmomentsensors 45a geöffnet bzw. geschlossen werden kann. Kupplungen, die eine stationäre Befestigung des Drehmomentsensors 45a erlauben, können gleichfalls eingesetzt werden. Gestrichelt eingezeichnet ist in Fig. 3 eine Variante, bei welcher jedem der Formteile 83 ein gesonderter Drehmomentsensor 45a zugeordnet ist, der dann an einem Arm 91 fest mit dem Transportstern 7a verbunden ist. Es versteht sich, daß das Formstück 83 auch fest mit dem Drehmomentsensor 45a verbunden sein kann, wenn der Transportstern 7a oder eine sonstige die Behälter 3a zu- und abführende Transportvorrichtung die zu verschraubenden Behälter 3a nacheinander auf das Formstück 83

7

aufsetzt.

Fig. 4 zeigt eine Variante, bei welcher ähnlich der Ausführungsform von Fig. 3 der zu verschraubende Behälter 3b durch Formschluß drehfest in einem Formteil 83b gehalten ist. Entsprechend Fig. 3 ist das Formteil 83b gleichachsig zur Schraubachse 13b mittels einer Welle 85b drehbar im Transportstern 7b gelagert. Die Welle 85b trägt ein Reibrad 93, das in der Verschraubstellung in Reibschluß mit einem Reibrad 95 eines Drehmomentsensors 45b steht. Der Drehmomentsensor 45b ist stationär am Maschinenrahmen 37b gehalten. Es versteht sich, daß anstelle der Reibräder 93, 95 auch Zahnräder eingesetzt werden können, wobei in beiden Versionen gegebenenfalls auch Radsegmente genügen. Anstelle des formschlüssig den zu verschraubenden Behälter haltenden Formteils können auch kraftschlüssig bzw. durch Reibkräfte den Behälter haltende Haltemittel vorgesehen sein. Kraft- oder reibschlüssig haltende Haltemittel erlauben auch die drehfeste Halterung von Behältern mit Kreisquerschnitt.

## Patentansprüche

1. Vorrichtung zum Verschrauben zweier Gegenstände, insbesondere zum Aufschrauben eines Schraubverschlusses (1) auf einen Behälter (3), umfassend

   - zwei in Richtung der Schraubachse (13) relativ zueinander beweglich an einer Maschinenbasis (37) geführte Aufnahmen (17, 55, 57, 59) für die beiden Gegenstände, von denen eine erste, insbesondere zur Führung des Behälters (3) bestimmte Aufnahme (55, 57, 59) den Gegenstand im wesentlichen drehfest an der Maschinenbasis (37) führt und eine zweite, insbesondere zur Führung des Schraubverschlusses (1) bestimmte Aufnahme (17) um die Schraubachse (13) drehbar an der Maschinenbasis (37) gelagert ist,
   - einen die zweite Aufnahme (17) rotierend antreibenden Motor (31), insbesondere einen Elektromotor,
   - Mittel (45), die das momentane, auf die Gegenstände ausgeübte Drehmoment erfassen und
   - eine auf die Drehmomenterfassungsmittel (45) ansprechende, den Motor (31) bei Erreichen eines vorbestimmten Sollwerts des Drehmoments abschaltende Steuerung (39),

   **dadurch gekennzeichnet,** daß die Steuerung (39) Mittel zur Steuerung der momentanen Drehzahl des Motors umfaßt und die momentane Drehzahl des Motors (31) abhängig vom Wert des von den Drehmomenterfassungsmitteln (45) erfaßten Drehmoments mit wachsendem Drehmomentwert mindert.

2. Vorrichtung nach Anspruch 1, dadurch gekennzeichnet, daß die Steuerung (39) die Drehzahl des Motors (31) entsprechend einem vorbestimmten Funktionszusammenhang steuert, der Drehmomentwerten, die von einem insbesondere vorbestimmten Drehmoment-Anfangswert zumindest angenähert auf den vorbestimmten Sollwert ($M_{soll}$) zunehmen, Drehzahlwerte zuordnet, die von einem insbesondere vorbestimmten Drehzahl-Anfangswert ($n_1$) auf angenähert null abnehmen.

3. Vorrichtung nach Anspruch 2, dadurch gekennzeichnet, daß die Steuerung (39) die Drehzahl des Motors (31) proportional zur Differenz zwischen dem Drehmoment-Sollwert ($M_{soll}$) und dem erfaßten Wert des momentanen Drehmoments einstellt.

4. Vorrichtung nach Anspruch 2 oder 3, dadurch gekennzeichnet, daß den Aufnahmen (17, 55, 57, 59) ein Positionssensoranordnung (71; 79, 81) zugeordnet ist, die während der Annäherung der zu verschraubenden Gegenstände bei Erreichen eines vorbestimmten Abstandes die Steuerung (39) veranlaßt, die Drehzahl des Motors (31) auf den vorbestimmten Drehzahl-Anfangswert ($n_1$) einzustellen.

5. Vorrichtung nach Anspruch 4, dadurch gekennzeichnet, daß die Steuerung (39) die Drehzahl mit Beginn der Annäherung auf einen Wert ($n_0$) größer als der Drehzahl-Anfangswert ($n_1$) einstellt und bei Erreichen des vorbestimmten Abstands die Drehzahl auf den Drehzahl-Anfangswert ($n_1$) mindert.

6. Vorrichtung nach Anspruch 4 oder 5, dadurch gekennzeichnet, die Positionssensoranordnung (71) die Position der zweiten Aufnahme (17) bezogen auf die Maschinenbasis (37) erfaßt.

7. Vorrichtung nach Anspruch 6, dadurch gekennzeichnet, daß die Positionssensoranordnung (71) die Position eines fest mit der zweiten Aufnahme (17) verbundenen Maschinenteils (73) erfaßt.

8. Vorrichtung nach Anspruch 7, dadurch gekennzeichnet, daß die Positionssensoranordnung (71) einen an der Maschinenbasis (37) stationär angeordneten, auf das Maschinenteil (73) ansprechenden Näherungsinitiator oder eine Lichtschranke umfaßt.

9. Vorrichtung nach Anspruch 6, dadurch gekennzeichnet, daß die Positionssensoranordnung zwei Positionssensoren (79, 81) umfaßt, von denen einer (79) die Position eines den Motor (31) tragenden, verschiebbar an der Maschinenbasis (37) geführten Schraubkopfs (9) relativ zur Maschinenbasis (37) erfaßt und der andere (81) die Position der verschiebbar an dem Schraubkopf (9) geführten zweiten Aufnahme (17) relativ zum Schraubkopf (9) erfaßt und daß die Steuerung (39) den Motor (31) abhängig von Signalen beider Positionssensoren (79, 81) auf den vorbestimmten Drehzahl-Anfangswert ($n_1$) einstellt.

10. Vorrichtung nach einem der Ansprüche 2 bis 9, dadurch gekennzeichnet, daß die Steuerung (39) zunächst die Drehzahl des Motors (31) auf den vorbestimmten Drehzahl-Anfangswert ($n_1$) einstellt und dann abhängig von dem erfaßten Wert des Drehmoments die Drehzahl ausgehend von dem vorbestimmten Drehzahl-Anfangswert ($n_1$) mindert, sobald der erfaßte Wert des Drehmoments den vorbestimmten Drehmoment-Anfangswert übersteigt.

11. Vorrichtung nach einem der Ansprüche 1 bis 10, dadurch gekennzeichnet, daß die Drehzahlsteuermittel einen Drehzahl-Sollwert festlegen, der abhängig vom erfaßten Wert des momentanen Drehmoments mit wachsendem Wert des erfaßten Drehmoments abnimmt und daß dem Motor (31) ein Drehzahlregelkreis zugeordnet ist, der die Drehzahl des Motors (31) auf den Drehzahl-Sollwert einregelt.

12. Vorrichtung nach einem der Ansprüche 1 bis 11, dadurch gekennzeichnet, daß die Drehzahlsteuermittel abhängig von der an dem Motor (31) einzustellenden Drehzahl bei Abnahme der Drehzahl auf nahe null oder/und abhängig von dem erfaßten Wert des Drehmoments bei Annäherung an einen Wert ungefähr gleich dem Drehmoment-Sollwert ($M_{soll}$) die Drehzahl konstant hält, bis der Drehmoment-Sollwert ($M_{soll}$) erreicht ist.

13. Vorrichtung nach einem der Ansprüche 1 bis 12, dadurch gekennzeichnet, daß die Drehmomenterfassungsmittel einen Drehmomentsensor (45; 45a, 45b) umfassen, der das auf den in der ersten Aufnahme (55, 57, 59; 83; 83b) geführten Gegenstand ausgeübte Drehmoment erfaßt.

14. Vorrichtung nach Anspruch 13, wobei die in der ersten Aufnahme (55, 57, 59) zu führenden Gegenstände eine zumindest angenähert kreisförmige, zur Schraubachse (13) koaxiale Querschnittsform haben, **dadurch gekennzeichnet,** daß die erste Aufnahme (55, 57, 59) einen gleichachsig zur Schraubachse (13) drehbaren Auflageteller (59) und drei um die Schraubachse (13) herum verteilt angeordnete, achsparallel zueinander und zur Schraubachse (13) vorzugsweise zumindest begrenzt schwenkbare Stützelemente (55, 57), insbesondere Andruckrollen umfaßt, von denen eines (55) federnd auf die anderen beiden (57) zu vorgespannt ist und eines (55) spielfrei mit dem Drehmomentsensor (45) gekuppelt ist.

15. Vorrichtung nach Anspruch 14, dadurch gekennzeichnet, daß die mit dem Drehmomentsensor (45) gekuppelte Andruckrolle (55) zusammen mit dem Drehmomentsensor (45) als Einheit quer zur Schraubachse (13) verschiebbar an der Maschinenbasis (37) geführt und federnd vorgespannt ist.

16. Vorrichtung nach Anspruch 13, dadurch gekennzeichnet, daß die erste Aufnahme Haltemittel (83; 83b) umfaßt, die den Gegenstand (3a; 3b) um die Schraubachse (13a; 13b) drehfest an der ersten Aufnahme halten und daß die Drehmomenterfassungsmittel einen Drehmomentsensor (45a; 45b) umfassen, der das auf die Haltemittel (83; 83b) ausgeübte Drehmoment erfaßt.

17. Vorrichtung nach Anspruch 16, dadurch gekennzeichnet, daß die Haltemittel (83; 83b) um die Schraubachse (13a; 13b) drehbar an der Maschinenbasis (37a; 37b) gelagert sind und daß der Drehmomentsensor (45a; 45b) direkt oder über ein Rädergetriebe (93, 95) mit den Haltemitteln (83; 83b) gekuppelt ist.

18. Vorrichtung nach Anspruch 16 oder 17, dadurch gekennzeichnet, daß die Haltemittel als Formstück (83; 83b) ausgebildet sind, das die Gegenstände in Formschluß drehfest hält.

**19.** Vorrichtung nach einem der Ansprüche 1 bis 18, dadurch gekennzeichnet, daß der Motor (31) als bürstenloser Gleichstrommotor ausgebildet ist.

**20.** Vorrichtung nach einem der Ansprüche 1 bis 19, dadurch gekennzeichnet, daß der Steuerung (39) ein Speicher (77) für mehrere unterschiedlich große Drehmoment-Sollwerte zugeordnet ist und die Steuerung (39) den Motor (31) erst dann abschaltet, wenn der erfaßte Wert des Drehmoments mehrere der Drehmoment-Sollwerte in einer vorbestimmten Reihenfolge und insbesondere in einer vorbestimmten Richtung überschreitet.

**21.** Vorrichtung nach einem der Ansprüche 1 bis 20, dadurch gekennzeichnet, daß der Steuerung (39) ein Dokumentationsspeicher (77) zugeordnet ist, in welchem für jede einzelne Verschraubung oder für Gruppen in ihrer Anzahl vorbestimmter, aufeinanderfolgender Verschraubungen eine den erfaßten Wert des Drehmoments repräsentierende Information speicherbar ist.

## Claims

**1.** Device for screwing together two articles, in particular for screwing a closure (1) on a container (3), comprising
   - two receivers (17, 55, 57, 59), guided movably relative to one another in the direction of the screw axis (13) on a machine base (37), for the two articles, of which a first receiver (55, 57, 59) intended, in particular, to guide the container (3), guides the article substantially non-rotatably on the machine base (37) and a second receiver (17) intended, in particular, to guide the closure (1) is mounted rotatably round the screw axis (13) on the machine base (37),
   - a motor (31), in particular an electric motor, rotatably driving the second receiver (17),
   - means (45) which detect the instantaneous torque exerted on the articles and
   - a controller (39) which responds to the torque detecting means (45) and switches off the motor (31) when a predetermined set value of the torque is reached,
   characterised in that the controller (39) comprises means for controlling the instantaneous speed of the motor and reduces the instantaneous speed of the motor (31) as the torque value increases - as a function of the value of the torque detected by the torque detecting means (45).

**2.** Device according to Claim 1, characterised in that the controller (39) controls the speed of the motor (31) according to a predetermined functional relationship and allocates speed values to the torque values which increase, in particular, from a predetermined torque starting value at least approximately to the predetermined set value ($M_{set}$), the speed values decreasing, in particular, from a predetermined speed starting value ($n_1$) to approximately zero.

**3.** Device according to Claim 2, characterised in that the controller (39) adjusts the speed of the motor (31) proportionally to the difference between the torque set value ($M_{set}$) and the detected values of the instantaneous torque.

**4.** Device according to Claim 2 or 3, characterised in that the receivers (17, 55, 57, 59) are allocated a position sensor arrangement (71; 79, 81) which, during the convergence of the articles to be screwed together, causes the controller (39) to adjust the speed of the motor (31) to the predetermined speed starting value ($n_1$) when a predetermined interval is attained.

**5.** Device according to Claim 4, characterised in that the controller (39) adjusts the speed at the beginning of convergence to a value ($n_0$) greater than the speed starting value ($n_1$) and reduces the speed to the speed starting value ($n_1$) when the predetermined interval is attained.

**6.** Device according to Claim 4 or 5, characterised in that position sensor arrangement (71) detects the position of the second receiver (17) with respect to the machine base (37).

**7.** Device according to Claim 6, characterised in that the position sensor arrangement (71) detects the position of a machine part (73) rigidly connected to the second receiver (17).

**8.** Device according to Claim 7, characterised in that the position sensor arrangement (71) comprises a proximity switch or light barrier arranged stationarily on the machine base (37) and responding to the machine part (73).

9.  Device according to Claim 6, characterised in that the position sensor arrangement comprises two position sensors (79, 81) of which one (79) detects the position of a screw head (9), carrying the motor (31) and guided displaceably on the machine base (37), relative to the machine base (37) and the other (81) detects the position of the second receiver (17), guided displaceably on the screw head (9), relative to the screw head (9) and in that the controller (39) adjusts the motor (31) to the predetermined speed starting value ($n_1$) as a function of signals from the two position sensors (79, 81).

10. Device according to one of Claims 2 to 9, characterised in that the controller (39) initially adjusts the speed of the motor (31) to the predetermined speed starting value ($n_1$) and then reduces the speed originating from the predetermined speed starting value ($n_1$) as a function of the detected torque value as soon as the detected torque value exceeds the predetermined torque starting value.

11. Device according to one of Claims 1 to 10, characterised in that the speed control means establish a speed set value which decreases as the value of the detected torque increases as a function of the detected value of the instantaneous torque and in that the motor (31) is allocated a speed control circuit which adjusts the speed of the motor (31) to the speed set value.

12. Device according to one of Claims 1 to 11, characterised in that the speed control means keeps the speed constant as a function of the speed to be adjusted at the motor (31) as the speed decreases to about zero or/and as a function of the detected value of the torque as a value substantially equal to the torque set value ($M_{set}$) is approached, until the torque set value ($M_{set}$) is reached.

13. Device according to one of Claims 1 to 12, characterised in that the torque detecting means comprise a torque sensor (45; 45a, 45b) which detects the torque exerted on the article guided in the first receiver (55, 57, 59; 83; 83b).

14. Device according to Claim 13, wherein the articles to be guided in the first receiver (55, 57, 59) have an at least approximately circular cross-sectional shape coaxial to the screw axis (13), characterised in that the first receiver (55, 57, 59) comprises a support plate (59) which is rotatable round the same axis as the screw axis (13) and three supporting elements (55, 57), in particular contact rollers, which are distributed round the screw axis (13), have mutually parallel axes, are pivotal preferably at least to a limited extent relative to the screw axis (13) and of which one (55) is pretensioned resiliently towards the other two (57) and one (55) is coupled without clearance to the torque sensor (45).

15. Device according to Claim 14, characterised in that the contact roller (55) coupled to the torque sensor (45) is guided displaceably on the machine base (37) transversely to the screw axis (13) as a unit together with the torque sensor (45) and is resiliently pretensioned.

16. Device according to Claim 13, characterised in that the first receiver comprises holding means (83; 83b) which hold the article (3a; 3b) non-rotatably round the screw axis (13a; 13b) on the first receiver and in that the torque detecting means comprise a torque sensor (45a; 45b) which detects the torque exerted on the holding means (83; 83b).

17. Device according to Claim 16, characterised in that the holding means (83; 83b) are mounted rotatably round the screw axis (13a; 13b) on the machine base (37a; 37b) and in that the torque sensor (45a; 45b) is coupled directly or via a wheel gear (93, 95) to the holding means (83; 83b).

18. Device according to Claim 16 or 17, characterised in that the holding means are designed as a shaped part (83; 83b) which holds the articles nonrotatably and positively.

19. Device according to one of Claims 1 to 18, characterised in that the motor (31) is designed as a brush-free d.c. motor.

20. Device according to one of Claims 1 to 19, characterised in that the controller (39) is allocated a memory (77) for several torque set values of different sizes and the controller (39) does not switch off the motor (31) until the detected value of the torque exceeds several of the torque set values in a predetermined sequence and, in particular, in a predetermined direction.

**21.** Device according to one of Claims 1 to 20, characterised in that the controller (39) is allocated a document memory (77) in which information representative of the detected torque value can be stored for each individual screw connection or for groups of successive screw connections of which the number is predetermined.

**Revendications**

**1.** Dispositif pour le vissage de deux objets, en particulier le vissage d'une capsule à visser (1) sur un récipient (3), comprenant
   - deux porte-objets (17, 55, 57, 59) destinés aux deux objets et guidés mobiles l'un par rapport à l'autre dans le sens de l'axe de vissage (13) sur un socle de machine (37), parmi lesquels un premier porte-objet (55, 57, 59) en particulier destiné au guidage du récipient (3) guide l'objet sensiblement sans rotation possible sur le socle de machine (37), et un deuxième porte-objet (17), en particulier destiné au guidage de la capsule à visser (1) est monté mobile en rotation selon l'axe de vissage (13) sur le socle de machine (37),
   - un moteur (31), en particulier un moteur électrique, entraînant le deuxième porte-objet (17) en rotation,
   - des moyens (45), captant le couple de rotation instantané exercé sur les objets et
   - une commande (39) répondant aux moyens (45) captant le couple de rotation et coupant le moteur (31) lorsqu'une valeur de consigne prédéfinie est atteinte,
   caractérisé en ce que la commande (39) comprend des moyens destinés à commander la vitesse de rotation instantanée du moteur et en ce que, à mesure que le couple de rotation augmente, elle réduit la vitesse de rotation instantanée du moteur (31), en fonction de la valeur du couple de rotation détectée par les moyens (45) captant le couple de rotation.

**2.** Dispositif selon la revendication 1, caractérisé en ce que la commande (39) commande la vitesse de rotation du moteur (31) en fonction d'un asservissement prédéfini, qui associe aux valeurs de couples de rotation, qui augmentent à partir d'une valeur initiale de couple de rotation en particulier prédéterminée pour au moins s'approcher d'une valeur de consigne ($M_{soll}$) prédéterminée, des valeurs de vitesse de rotation, qui décroissent en passant d'une valeur initiale de vitesse de rotation ($n_1$) en particulier prédéterminée, à approximativement zéro.

**3.** Dispositif selon la revendication 2, caractérisé en ce que la commande (39) règle la vitesse de rotation du moteur (31) proportionnellement à la différence entre la valeur de consigne de couple de rotation ($M_{soll}$) et la valeur détectée pour le couple de rotation instantané.

**4.** Dispositif selon la revendication 2 ou 3, caractérisé en ce qu'aux porte-objets (17, 55, 57, 59), est associé un dispositif (71 ; 79, 81) à capteurs de position, qui pendant l'approche des objets à visser, lorsque l'on atteint un certain écartement, amène la commande (39) à régler la vitesse de rotation du moteur (31) sur la valeur initiale de vitesse de rotation ($n_1$) prédéterminée.

**5.** Dispositif selon la revendication 4, caractérisé en ce que la commande (39) règle la vitesse de rotation, au début de l'approche, sur une valeur ($n_0$) supérieure à la valeur initiale de vitesse de rotation ($n_1$) et réduit la vitesse de rotation à la valeur initiale de vitesse de rotation ($n_1$) lorsque l'écartement prédéfini est atteint.

**6.** Dispositif selon la revendication 4 ou 5, caractérisé en ce que le dispositif (71) à capteurs de position détecte la position du deuxième porte-objet (17) par rapport au socle de machine (37).

**7.** Dispositif selon la revendication 6, caractérisé en ce que le dispositif (71) à capteurs de position détecte la position d'une pièce de machine (73) liée de manière fixe au deuxième porte-objet (17).

**8.** Dispositif selon la revendication 7, caractérisé en ce que le dispositif (71) à capteurs de position comprend un capteur de proximité ou une barrière lumineuse monté(e) de manière stationnaire sur le socle de machine (37) et réagissant à la pièce de machine (73).

9. Dispositif selon la revendication 6, caractérisé en ce que le dispositif (71) à capteurs de position comprend deux capteurs de position (79, 81) dont l'un (79) détecte la position d'une tête de vissage (9) guidée en translation sur le socle de machine (37) et portant le moteur (31), par rapport au socle de machine (37), et l'autre (81) détecte la position du deuxième porte-objet (17) guidé en translation sur la tête de vissage (9) par rapport à la tête de vissage (9) et en ce que la commande (39) règle le moteur (31) sur la valeur initiale de vitesse de rotation ($n_1$) en fonction des signaux des deux capteurs de position (79, 81).

10. Dispositif selon l'une des revendications 2 à 9, caractérisé en ce que la commande (39) règle tout d'abord la vitesse du moteur (31) sur la valeur initiale de vitesse de rotation ($n_1$) prédéfinie, puis réduit la vitesse de rotation à partir de la valeur initiale de vitesse de rotation ($n_1$) prédéfinie, en fonction de la valeur détectée pour le couple de rotation, dès que la valeur détectée pour le couple de rotation dépasse la valeur initiale de couple de rotation prédéfinie.

11. Dispositif selon l'une des revendications 1 à 10, caractérisé en ce que les moyens de commande de la vitesse de rotation déterminent une valeur de consigne de vitesse de rotation qui décroît en fonction de la valeur captée pour le couple de rotation instantané à mesure que la valeur détectée pour le couple de rotation augmente et en ce qu'une boucle de régulation est associée au moteur (31) et règle la vitesse de rotation du moteur (31) sur la valeur de consigne de vitesse de rotation.

12. Dispositif selon l'une des revendications 1 à 11, caractérisé en ce que les moyens de commande de la vitesse de rotation maintiennent constante la vitesse de rotation en fonction de la vitesse de rotation à régler sur le moteur (31) lorsque la vitesse de rotation tend approximativement vers zéro et/ou en fonction de la valeur détectée pour le couple de rotation à l'approche d'une valeur sensiblement égale à la valeur de consigne de couple de rotation ($M_{soll}$), jusqu'à obtention de la valeur de consigne de couple de rotation ($M_{soll}$).

13. Dispositif selon l'une des revendications 1 à 12, caractérisé en ce que les moyens de détection du couple de rotation comprennent un capteur de couple de rotation (45 ; 45a, 45b), qui détecte le couple de rotation exercé sur l'objet guidé dans le premier porte-objet (55, 57, 59 ; 83 ; 83b).

14. Dispositif selon la revendication 13, dans lequel les objets à guider dans le premier porte-objet (55, 57, 59) présentent une section sensiblement circulaire, coaxiale par rapport à l'axe de vissage (13),
caractérisé en ce que le premier porte-objet (55, 57, 59) comporte un plateau support (59) capable de rotation de manière coaxiale par rapport à l'axe de vissage (13) et trois éléments d'appui (55, 57), en particulier des galets de pression, répartis autour de l'axe de vissage (13) et de préférence capables de pivoter de manière au moins limitée, selon des axes parallèles les uns par rapport aux autres et par rapport à l'axe de vissage (13), dont l'un (55) est précontraint de manière élastique en direction des deux autres (57) et dont l'un (55) est couplé sans jeu avec le capteur de couple de rotation (45).

15. Dispositif selon la revendication 14, caractérisé en ce que le galet (55) couplé au capteur de couple de rotation (45), formant une unité avec le capteur de couple de rotation (45), est guidé en translation sur le socle de machine (37) perpendiculairement à l'axe de vissage (13) et précontraint de manière élastique.

16. Dispositif selon la revendication 13, caractérisé en ce que le premier porte-objet comprend des moyens de fixation (83 ; 83b) qui maintiennent l'objet (3a ; 3b) sans rotation possible selon l'axe de vissage (13a ; 13b) sur le premier porte-objet et en ce que les moyens de détection du couple de rotation comprennent un capteur de couple de rotation (45a ; 45b) qui détecte le couple de rotation exercé sur les moyens de fixation (83 ; 83b).

17. Dispositif selon la revendication 16, caractérisé en ce que les moyens de fixation (83 ; 83b) sont montés sur le socle de machine (37a ; 37b) mobiles selon l'axe de vissage (13a ; 13b) et en ce que le capteur de couple de rotation (45a ; 45b) est couplé avec les moyens de fixation (83 ; 83b) directement ou par l'intermédiaire d'un engrenage (93, 95).

18. Dispositif selon la revendication 16 ou 17, caractérisé en ce que les moyens de fixation sont conçus comme une pièce profilée (83 ; 83b) qui maintient fermement les objets par correspondance des formes.

19. Dispositif selon l'une des revendications 1 à 18, caractérisé en ce que le moteur (31) est conformé comme un moteur à courant continu sans balais.

20. Dispositif selon l'une des revendications 1 à 19, caractérisé en ce qu'une mémoire (77) destinée à diverses valeurs de consigne de couple de rotation est associée à la commande (39) et en ce que la commande (39) ne coupe le moteur (31) que lorsque la valeur détectée pour le couple de rotation dépasse plusieurs valeurs de consigne de couple de rotation successives, dans un certain ordre et en particulier dans un certain sens.

21. Dispositif selon l'une des revendications 1 à 20, caractérisé en ce qu'une mémoire d'archivage (77) dans laquelle pour chaque vissage ou pour des groupes d'un nombre déterminé de vissages successifs, il est possible de stocker l'information représentant la valeur détectée pour le couple de rotation, est associée à la commande (39).

Fig. 1

Fig. 2a

Fig. 2b

Fig. 3

Fig. 4